(19) Europäisches Patentamt
European Patent Office
Office européen des brevets

(11) **EP 2 610 994 B1**

(12) **EUROPEAN PATENT SPECIFICATION**

(45) Date of publication and mention
of the grant of the patent:
**08.07.2020 Bulletin 2020/28**

(51) Int Cl.:
*H02J 7/00* (2006.01)  *H02M 3/07* (2006.01)

(21) Application number: **12162198.1**

(22) Date of filing: **29.03.2012**

(54) **Series-type charging device and charging method thereof**

Serientyp-Ladevorrichtung und Ladeverfahren dafür

Dispositif de chargement de type série et procédé de chargement associé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2011 TW 100149358**

(43) Date of publication of application:
**03.07.2013 Bulletin 2013/27**

(73) Proprietor: **Twinhead International Corp.
Neihu, Taipei (TW)**

(72) Inventor: **Tseng, Yuan-Li
Taipei City (TW)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(56) References cited:
**EP-A1- 1 202 426     US-A- 5 557 189
US-A- 5 773 959     US-A1- 2008 278 119
US-A1- 2008 315 826**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND OF THE INVENTION

### 1. Field of the Invention

The present invention relates to a series-type charging device and a charging method thereof, and more particularly to the device and method that use a control unit and a detector unit to adjust an input power, an output power and a next-level power to achieve the effect of completely utilizing the inputted power to charge a battery.

### 2. Description of Related Art

As science advances, electronic products including mobile phones, remote controllers and flashlights used in our daily life are closely related to batteries. Due to the environmental protection issue, disposable batteries are gradually replaced by rechargeable batteries, so that charger related products are well developed, and parameters such as the charging efficiency and range becomes the targets of the severe competition in the related market.

A charger capable of charging a large quantity of power is developed in form of series-type expandable charger which combines a plurality of charging batteries for charging, but the chargers of this type charge one battery or a set of batteries, and then the next battery or group of batteries will be charged after the previous one or set are fully charged, so that the external inputted charging power is greater than the required charging power for charging the battery, and the remaining power cannot be used further to cause an unnecessary waste, such as US5557189A, which provides a battery charging apparatus for charging a plurality of cells. The current continues to flow through the variable resistor after the cell has become charged fully which means wasteful power consumption. Besides, there is a risk that the variable resistor be destructed by heat evolution. US 2008/278119 A1 provides a battery charger includes a power source for supplying a primary charge current to a first battery, and a charge manager for charging a second battery. The charge manager is coupled to the power source and is configured to charge the second battery with a secondary charge current in accordance with a continuous comparison between a predefined maximum current limit and a total current drawn from the power source. US2008/315826 discloses a series-type charging device according to the preamble of claim 1.

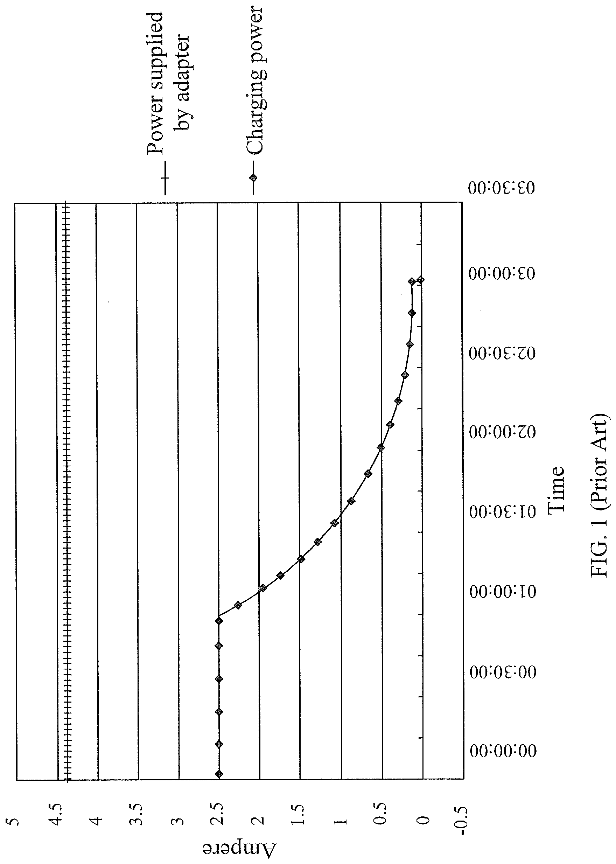

With reference to FIG. 1 for a curve of the charging curve of a single battery in accordance with a prior art, an adapter capable of supplying a maximum current of 4.35 amperes is provided. Due to the properties of charging batteries, the charging current can only be increased to a maximum of 2.5 amperes, so that the remaining 1.85 amperes cannot be used at the beginning.

In other words, the total power supply of the adapter cannot be utilized completely (which is indicated by the difference between the two color lines in the figure), and the whole charging process takes about 3 hours and 2 minutes. In the conventional charging method, it takes approximately 18 hours and 12 minutes to charge a group of six serial batteries.

In view of the aforementioned problem of the conventional charger and charging method, the inventor of the present invention designed a series-type charging device and a charging method thereof, wherein a charging control IC is integrated with a power detector to improve the problem of failing to fully utilize the total power, so as to achieve the effect of improving the charging efficiency.

## SUMMARY OF THE INVENTION

In view of the aforementioned problem of the prior art, it is a primary objective of the present invention to provide a series-type charging device and a charging method thereof, and the farthest battery coupled to the charger is charged in a first priority, and then other batteries are charged sequentially to achieve the effects of charging the batteries quickly and fully utilizing the input power.

To achieve the aforementioned objective, the present invention provides a series-type charging device, comprising: an input-terminal, an output-terminal, a control unit and a detector unit. The input-terminal receives an input power. The output-terminal connects the input-terminal and another series-type charging device and provides a next-level power. The control unit connects the input-terminal and the output-terminal and stores an upper limit value of the input power, and obtains an output power by a shunt of the input power. The control unit generates a charging power according to the output power, and charges a battery. The detector unit is connected between the input-terminal and the output-terminal to measure a supply power of the input power. Wherein, when the output-terminal connects the other series-type charging device, the output power is reduced, and the input power is converted completely into the next-level power to charge the battery of another series-type charging device in a first priority, and when the supply power of the series-type charging device has not reached the upper limit value, the remaining input power is distributed immediately to the other series-type charging device to charge the battery of the series-type charging device.

Wherein, the control unit further comprises a comparator and a modulator, and the modulator controls the control unit based on the comparator to generate the charging power. the control unit

Wherein, the input power of the input-terminal is supplied by a power supply device, and the upper limit value is equal to a rated power of the power supply device, and the modulator controls the control unit according to the upper limit value to maintain the input power below the upper limit value.

Wherein, the comparator stores an upper limit of a charging power according to a specification of the battery, and the modulator controls the control unit according to the upper limit value of the charging power to maintain the charging power below the upper limit of the charging power.

Wherein, when the comparator determines that the difference between the upper limit value and the supply power is greater than or equal to the charging power upper limit value, the modulator will control the control unit to generate the charge power equal to the upper limit value of the charging power.

Wherein, when the comparator determines that the difference between the upper limit value and the supply power is smaller than the upper limit value of the charging power and greater than zero, the modulator will control the control unit to generate the charging power same as the difference between the upper limit value and the supply power.

Wherein, when the comparator determines that the difference between the upper limit value and the supply power is equal to zero, the modulator will control the control unit not to generate the charging power.

To achieve the aforementioned objective, the present invention further provides a charging method of a series-type charging device, and the charging method comprises the steps of: receiving an input power by an input-terminal; connecting to another series-type charging device through an output-terminal to supply a next-level power; measuring a supply power of the input power by a detector unit; obtaining an output power by a current division of the input power, and using a charging control unit to generate a charging power according to the output power to charge a battery; determining whether to connect the output-terminal to another series-type charging device, reducing the output power when another device is connected and converting the input power completely into the next-level power to charge the battery of the other series-type charging device in a first priority; and determine whether the supply power of the series-type charging device has reached an upper limit, when the upper limit value has not been reached then distributing the remaining input power to the other series-type charging device immediately and charging the battery of the series-type charging device.

Wherein, the control unit further comprises a comparator and a modulator, and the modulator controls the control unit to generate the charging power based on the comparator.

Wherein, the input power of the input-terminal is supplied by a power supply device, and the upper limit value is equal to a rated power of the power supply device and the modulator controls the control unit to maintain the input power below the upper limit value.

Wherein, the comparator stores an upper limit of a charging power according to a specification of the battery, and the modulator controls the control unit according to the upper limit value of the charging power to maintain the charging power below the upper limit of the charging power.

Wherein, the comparator is used to determine a difference between the upper limit value and the supply power and a relation with the upper limit value of the charging power, and the modulator controls the control unit to generate the charging power based on the comparator.

Wherein, when the comparator determines that the difference between the upper limit value and the supply power is greater than or equal to the charging power upper limit value, the modulator will control the control unit to generate the charge power equal to the upper limit value of the charging power.

Wherein, when the comparator determines that the difference between the upper limit value and the supply power is smaller than the upper limit value of the charging power and greater than zero, the modulator will control the control unit to generate the charging power same as the difference between the upper limit value and the supply power.

Wherein, when the comparator determines that the difference between the upper limit value and the supply power is equal to zero, the modulator will control the control unit not to generate the charging power.

In summation, the series-type charging device and the charging method of the present invention have one or more of the following advantages:

(1) The series-type charging device and the charging method use a control unit and a detector unit to control and adjust the input power, output power and next-level power, so that the farthest charger will charge the battery first, and the remaining power is distributed to other rechargeable batteries, so that the input power can be utilized fully without causing any remaining power in a certain charging device or any unnecessary waste.

(2) The series-type charging device and the charging method use a detector unit to store the upper limit value of the input power and the upper limit value of the charging power to protect the power supply device and the rechargeable battery from being damaged by an overload of power.

(3) The series-type charging device and the charging method are not restricted to the application for the same type of rechargeable batteries only, but different types of batteries (such as lithium batteries and nickel-cadmium batteries) or different charging currents (such as No. 5 AA batteries and No 7 AAA batteries) can use this device to achieve the high-efficiency charging effect.

**BRIEF DESCRIPTION OF THE DRAWINGS**

FIG. 1 is a graph, showing the charging of a single battery in accordance with a prior art;

FIG. 2 is a block diagram of a series-type charging device in accordance with a first preferred embodiment of the present invention;

FIG. 3 is a flow chart of a charging method of a series-type charging device in accordance with the first preferred embodiment of the present invention;

FIG. 4 is a block diagram of a series-type charging device in accordance with a second preferred embodiment of the present invention;

FIG. 5 is a graph, showing the charging of a series-type charging device in accordance with the second preferred embodiment of the present invention; and

FIG. 6 is a graph of total electric power versus time of a series-type charging device in accordance with the second preferred embodiment of the present invention.

## DETAILED DESCRIPTION OF THE PREFERRED EMBODIMENTS

The foregoing and other objectives, technical characteristics and advantages of the present invention will become apparent with the detailed description of preferred embodiments accompanied with related drawings as follows. It is noteworthy to point out that the drawing are provided for the purpose of illustrating the invention and assisting the specification, but not necessarily drawn in exact scale or precision, and not intended for limiting the scope of the present invention.

The present invention discloses a series-type charging device and a charging method thereof, wherein an input power is fully utilized to charge each of the charging devices, and rechargeable batteries of different specifications can use the device and method for the charging. However, the scope of the invention is not limited to the aforementioned applications only.

It is noteworthy to point out that same numerals are used in the following preferred embodiments to represent the same respective elements of the series-type charging device and the charging method in accordance with the present invention.

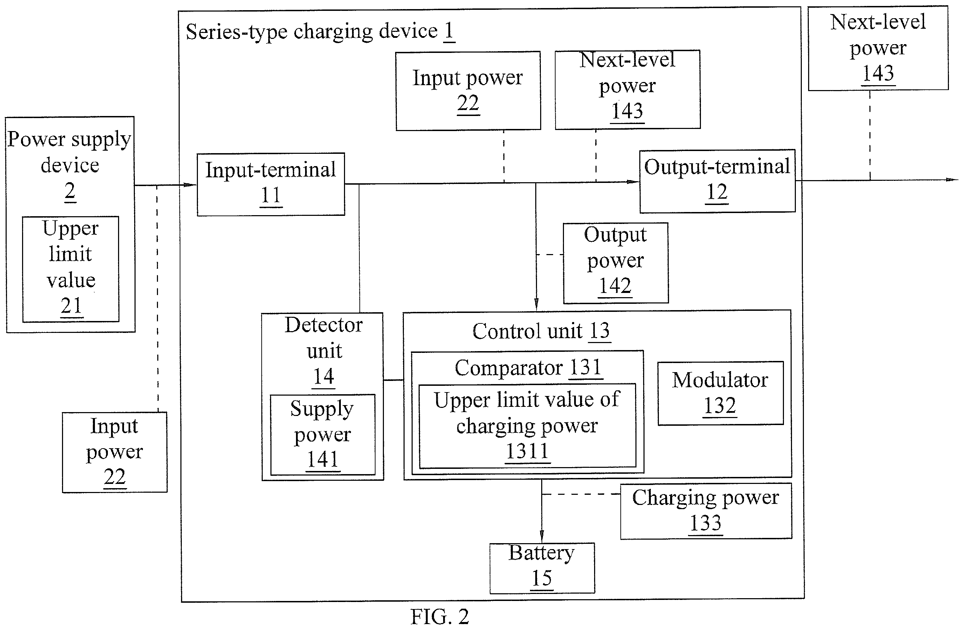

With reference to FIG. 2 for a block diagram of a series-type charging device in accordance with the first preferred embodiment of the present invention, the series-type charging device 1 is coupled to a power supply device 2. The series-type charging device 1 comprises: an input-terminal 11, an output-terminal 12, a control unit 13 and a detector unit 14. The input-terminal 11 is coupled to a detector unit 14 for receiving an input power 22 inputted by the power supply device 2. The power supply device 2 can be a linear power supply device, a switching power supply device, a resonant power supply device or a general utility power, and it also can be a previous-level series-type charging device. An end of the output-terminal 12 is coupled to the input-terminal 11, and the other end of the output-terminal 12 is coupled to a next-level series-type charging device 1, and a next-level power 143 is supplied to the other series-type charging device 1. The input-terminal 11 and the output-terminal 12 can be general conductive copper wires, universal serial bus (USB) or serial advanced technology attachment (SATA) terminals. The control unit 13 is coupled between the input-terminal 11 and output-terminal 12 and an output power 142 is obtained by a shunt of the input power 22. The control unit 13 further comprises a comparator 131 and a modulator 132, and the modulator 132 controls the control unit to generate a charging power 133 based on the comparator 131. Wherein, the comparator 131 stores an upper limit value of a charging power 1311 according to a specification of a battery 15 of the series-type charging device 1. An end of the detector unit 14 is coupled to the input-terminal 11 and the output-terminal 12, and the other end is coupled to the control unit 13 to measure a supply power 141 of the input power 22. The detector unit 14 can be a resistor capable of calculating a current by the potential difference between both ends of the resistor, so that the supply power 141 can be calculated. Wherein, the battery 15 of the series-type charging device can be a lead acid battery, a nickel cadmium battery, a nickel hydrogen battery, a secondary lithium battery, a lithium ion battery or a polymer lithium battery. As described above, the control unit 13 receives the shunt of the input power 22 to obtain an output power 142, and the output power 142 is controlled and adjusted according to the supply power 141 and an upper limit value 21 to generate a next-level power 143 and a charging power 133 of the corresponding output power 142 to charge the battery 15. Wherein, the upper limit value 21 is equal to a rated power of the power supply device 2. The control method follows the following equation:

$$P\_in = P\_chg + P\_out$$

Where, P_in is the input power 22, which is equal to the sum of P_chg output power 142 and P out of the next-level power 143.

In this preferred embodiment, the modulator 132 in the control unit 13 controls the control unit 13 according to the upper limit value 21 to prevent the input power 22 from exceeding the upper limit value 21 and avoid an overload of the power supply device 2. In this preferred embodiment, the comparator 131 also stores an upper limit value 1331 of the charging power to control the charging power 133 from exceeding the upper limit value 1331 of the charging power according to the specification of the battery 15 to protect the battery 15. It is noteworthy to point out that if the output-terminal 12 of the series-type charging device 1 is coupled to another series-type charging device 1, the control unit 13 will reduce the output power 142 and convert the input power 22 completely into a next-level power 143 to charge the battery 15 of the other series-type charging device 1 first. In other words, the next-level power P_out is the power source of the next-level device. If the other series-type charging device 1 is fully charged and there is still some remaining power, the input power 22 of the power supply device 2 (which is also the supply power 141 measured by the detector unit 14) has not reached the upper limit value 21, and the remaining power can be used as a charging power to be distributed to this series-type charging device 1 and any other series-type charging device 1. Until the supply power 141 of the power supply device 2 has reached the upper limit value 21, there will no more remaining power for charging other series-type charging devices 1. In summation, the comparator 131 determines the difference between the upper limit value 21 and supply power 141 to compare with the upper limit value of the charging power 1311. The control unit 13 generates the corresponding charging power 133 to charge the battery 15. Therefore, if the comparator 131 determines that the difference between the upper limit value 21 and the supply power 141 is greater than or equal to the upper limit value of the charging power 1311, there is sufficient charging power for charging the battery 15 of the series-type charging device 1, and the modulator 132 controls the control unit 13 to generate the charging power 133 equal to the upper limit value of the charging power 1311 to fully charge the battery 15. If the comparator 131 determines that the difference between the upper limit value 21 and the supply power 141 is smaller than the upper limit value of the charging power 1311 and greater than zero, the charging power of the battery 15 has not reached the upper limit value of the charging power 1311, and the modulator 132 controls the control unit 13 to generate the charging power 133 the same as the difference between the upper limit value 21 and the supply power 141 to partially charge the battery 15. If the comparator 131 determines that the difference between the upper limit value 21 and the supply power 141 is equal to zero, the input power 22 supplied by the power supply device 2 has reached the upper limit value 21, and there is no remaining power to charge the battery 15 of the series-type charging device 1. In order to avoid any overload of the power supply device 2, the modulator 132 controls the control unit 13 not to generate any charging power 133.

Even though the charging method of the series-type charging device of the present invention has been described in the section of the series-type charging device of the present invention, a flow chart is provided for illustrating the charging method in details below.

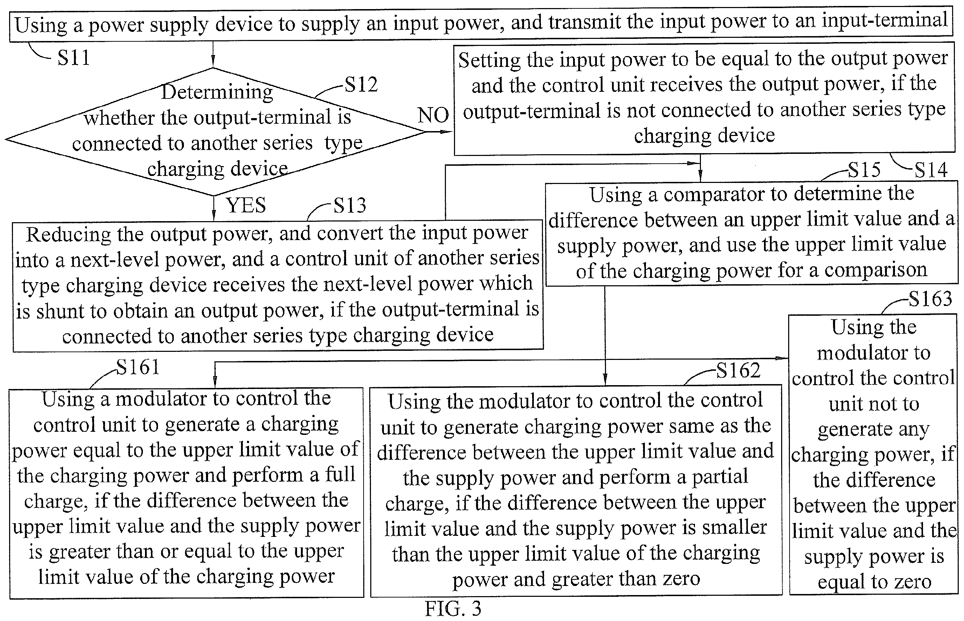

With reference to FIG. 3 for a flow chart of a charging method of a series-type charging device in accordance with the first preferred embodiment of the present invention, the method comprises the following steps:

S11: Using a power supply device to supply an input power, and transmit the input power to an input-terminal.

S12: Determining whether the output-terminal is connected to another series-type charging device.

S13: Reducing the output power, and convert the input power into a next-level power, and a control unit of another series-type charging device receives the next-level power which is shunt to obtain an output power, if the output-terminal is connected to another series-type charging device.

S14: Setting the input power to be equal to the output power and the control unit receives the output power, if the output-terminal is not connected to another series-type charging device.

S15: Using a comparator to determine the difference between an upper limit value and a supply power, and use the upper limit value of the charging power for a comparison.

S161: Using a modulator to control the control unit to generate a charging power equal to the upper limit value of the charging power and perform a full charge, if the difference between the upper limit value and the supply power is greater than or equal to the upper limit value of the charging power.

S162: Using the modulator to control the control unit to generate charging power same as the difference between the upper limit value and the supply power and perform a partial charge, if the difference between the upper limit value and the supply power is smaller than the upper limit value of the charging power and greater than zero.

S163: Using the modulator to control the control unit not to generate any charging power, if the difference between the upper limit value and the supply power is equal to zero.

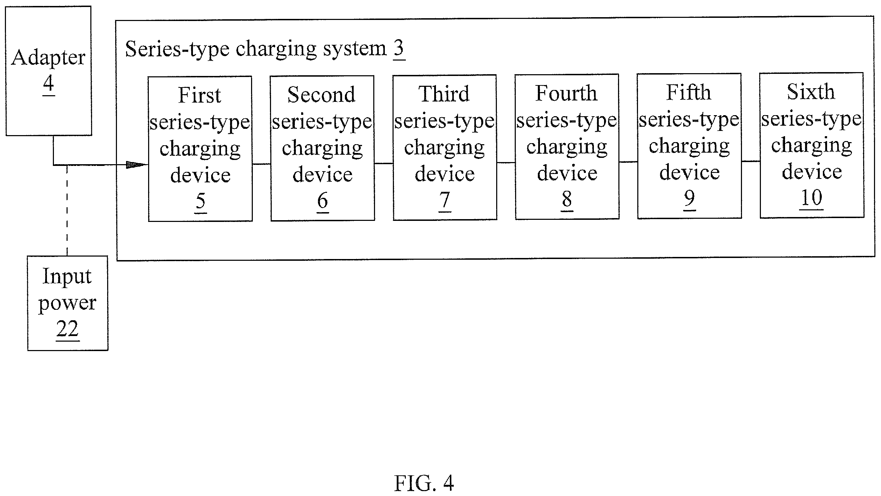

In FIGS. 4 to 6, FIG. 4 shows a block diagram of a series-type charging device in accordance with the second preferred embodiment of the present invention. In FIG. 4, a series-type charging system 3 is coupled to an adapter 4. The series-type charging system 3 is comprised of a plurality of series-type charging devices 1, and each series-type charging device 1 comprises: a first series-type charging device 5, a second series-type charging device 6, a third series-type charging device 7, a fourth series-type charging device 8, a fifth series-type charging device 9, a sixth series-type charging device 10. A first series-type charging device 5 comprises: an input-terminal 11, an output-terminal 12, a control unit 13, a detector unit 14 and a battery 15. Wherein, the control unit 13 comprises a comparator 131 and a modulator 132. The adapter 4 has an upper limit value 21 which is equal to 4.35 amperes in this preferred embodiment and used for avoiding an overload of the series-type charging system 3. The comparator stores an upper limit value of the charging power 1311 according to the specification of the battery 15. In this preferred embodiment, the upper limit value of the charging power 1311 is equal to 2.5 amperes for preventing the charging power 133 from exceeding the upper limit value of the charging power 1311 and preventing the battery from being damaged. In this preferred embodiment, the first series-type charging device 5 to the sixth series-type charging device 10 are series-type charging device 1 of the same type, and each charging device is coupled by a USB cable to transmit electric power, and each charging device has a battery with the same charging specification of 2.5 amperes. Since the first series-type charging device 5 to the sixth series-type charging device 10 are the series-type charging devices 1 of the same type, and the related connection and operation of the series-type charging devices 1 have been described above, and thus will not be repeated. The series-type charging system 3 receives an input power 22 supplied from the adapter 4, wherein the input power 22 is equal to 4.35 amperes. The input power 22 is transmitted through a USB cable to the first series-type charging device 5. Since the output-terminal 12 of the first series-type charging device 5 is coupled to the second series-type charging device 6, therefore the first series-type charging device 5 reduces the output power 142 and converts the input power 22 completely into a next-level power 143 to be transmitted through the USB cable to the second series-type charging device 6. Similarly, the second series-type charging device 6 converts the input power 22 completely into the next-level power 143 to be transmitted to the third series-type charging device 7, and so forth until the sixth series-type charging device 10. There is no more charging device connected behind the sixth series-type charging device 10, therefore the sixth series-type charging device 10 satisfies the following condition:

$$P\_chg = P\_lit$$

Where, P chg is the input power 142 of the sixth series-type charging device 10. In other words, the input power 22 of the sixth series-type charging device 10 is equal to the output power 142 used for fully charging the battery 15 of the sixth series-type charging device 10.

From the description above, the comparator 131 of the sixth series-type charging device 10 determines that the difference between the upper limit value 21 equal to 4.35 amperes and the supply power 141 equal to 0 amperes is equal to 4.35 amperes, so that the modulator 132 controls the control unit 13 to generate a charging power 133 of 2.5 amperes to fully charge the battery 15. In other words, the of current (4.35 amperes) of the input power 22 of the adapter 4 minus the current (2.5 amperes) of the charging power 133 of the sixth series-type charging device 10 is equal to the remaining current (1.85 amperes) which can be used by other devices. More specifically, there is still an input power 22 of 1.85 amperes left for charging the fifth series-type charging device 9. In the fifth series-type charging device 9, the adapter 4 has already charged the battery 15 of the sixth series-type charging device 10, so that the detector unit 14 of the fifth series-type charging device 9 will detect a supply power of 2.5 amperes (wherein the sixth series-type charging device 10 has used 2.5 amperes), and the comparator 131 of the fifth series-type charging device 9 determines that the difference between the upper limit value 21 (which equals to 4.35 amperes) and the supply power 141 (which equals to 2.5 amperes) is equal to 1.85 amperes, so that the modulator 132 controls the control unit 13 to generate a charging power 133 of 1.85 amperes to partially charge the battery 15. After the battery 15 of the sixth series-type charging device 10 is charged gradually, the input power 22 of the sixth series-type charging device 10 (which is also the next-level power 143 of the fifth series-type charging device) drops gradually until it reaches zero. Now, the fifth series-type charging device 9 can be charged fully, and the remaining power is provided for charging the fourth series-type charging device 8, and so forth, until all charging devices are charged.

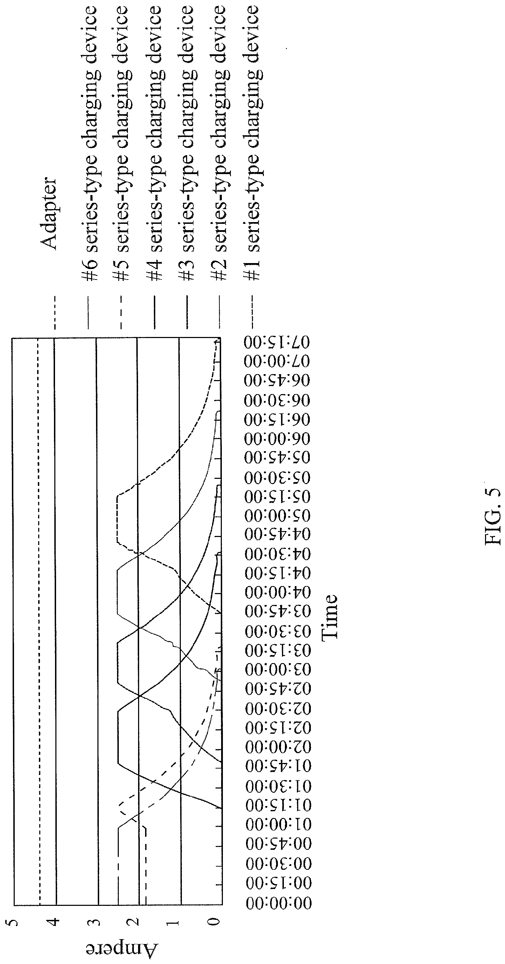

With reference to FIG. 5 for a graph, showing the charging of a series-type charging device in accordance with the second preferred embodiment of the present invention, the sixth series-type charging device 10 is charged at a full speed at the beginning, and 2.5 amperes out of the 4.35 amperes of the supply power is used and 1.85 amperes are left for charging the fifth series-type charging device 9. After an hour, the sixth series-type charging device 10 is fully charged, and the fifth series-type charging device 9 is then charged at a full speed, and the remaining power is supplied for the fourth series-type charging device 8, and so forth, until the first series-type charging device 5 is fully charged. In the whole process, there will be no remaining power or any unnecessary waste. In other words, the time for fully charging the battery of the sixth series-type charging device 10 is equal to 3 hours and 2 minutes. If the same batteries are charged by the conventional method, the total time will take 18 hours and 12 minutes. Since the remaining power is distributed to other devices during the charging process, therefore the total time taken by the invention is reduced by 7 hours 17 minutes and 30 seconds, and 60% of the charging time is saved.

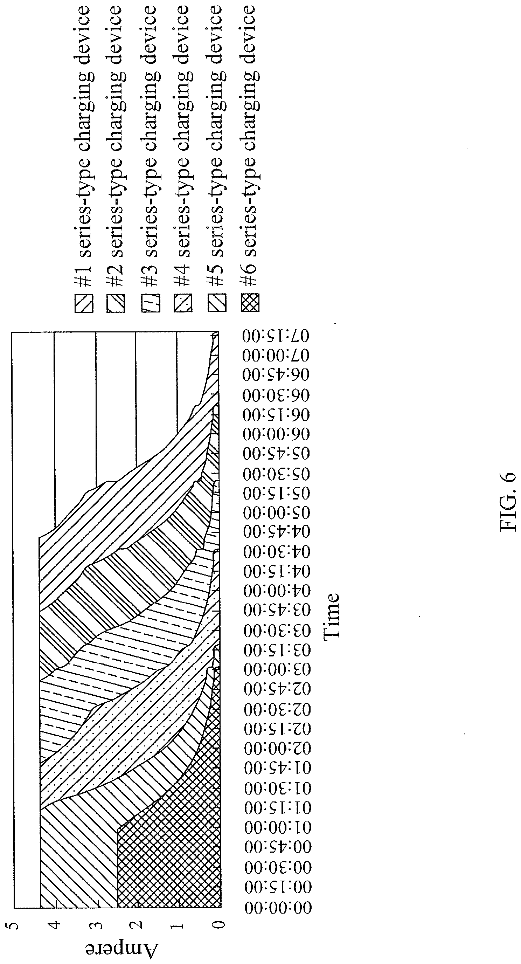

With reference to FIG. 6 for a graph of total electric power versus time of a series-type charging device in accordance with the second preferred embodiment of the present invention, the total charging current per unit time is equal to 4.35 amperes. In other words, the total charging current of the charging device being charged is equal to the total charging current supplied from the power adapter 4, and the total charging current starts dropping when the first series-type charging device 5 is gradually charged, and the total charging current drops to zero when the first series-type charging device 5 is fully charged.

**Claims**

1. A series-type charging device (1), comprising:

   an input-terminal (11), used to receive an input power (22);
   an output-terminal (12), coupled to the input-terminal (11), and coupled to another series-type charging device (1) to supply a next-level power (143);
   a control unit (13), coupled between the input-terminal (11) and the output-terminal (12), and provided for obtaining an output power (142) from a shunt of the input power (22), and generating a charging power (133) according to the output power (142) to charge a battery (15); and
   a detector unit (14), with an end coupled between the input-terminal (11) and the output-terminal (12), and the other end coupled to the control unit (13) to measure a supply power (141) of the input power (22);
   **characterized in that** the series-type charging device (1) further comprising:
   when the output-terminal (12) is coupled to another series-type charging device (1), the output power (142) is reduced, and the input power (22) is converted completely into the next-level power (143) to charge the battery (15) of another series-type charging device (1) in a first priority, and when the supply power (141) of the series-type charging device (1) has not reached an upper limit value (21), the remaining input power (22) will be distributed to the other series-type charging device (1) immediately to charge the battery (15) of the series-type charging device (1).

2. The series-type charging device (1) of claim 1, wherein the control unit (13) further comprises a comparator (131) and a modulator (132), and the modulator (132) controls the control unit (13) based on the comparator (131) to generate the charging power (133).

3. The series-type charging device (1) of claim 2, wherein the input power (22) of the input-terminal (11) is supplied by a power supply device (2) and the upper limit value (21) is equal to a rated power of the power supply device (2), and the modulator (132) controls the charging power (133) of the control unit (13) to remain below the upper limit value (21).

4. The series-type charging device (1) of claim 3, wherein the comparator (131) stores an upper limit value of the charging power (1311) according to a specification of the battery (15), and the modulator (132) controls the charging power (133) of the control unit (13) below the upper limit value of the charging power (1311).

5. The series-type charging device (1) of claim 4, wherein when the comparator (131) determines that the difference between the upper limit value (21) and the supply power (141) is greater than or equal to the charging power (133) upper limit value (21), then the modulator (132) controls the control unit (13) to generate the charging power (133) equal to the upper limit value of the charging power (1311).

6. The series-type charging device (1) of claim 4, wherein when the comparator (131) determines that the difference between the upper limit value (21) and the supply power (141) is smaller than the upper limit value of charging power (1311) and greater than zero, the modulator (132) controls the control unit (13) to generate the charging power (133) same as the difference between the upper limit value (21) and the supply power (141).

7. The series-type charging device (1) of claim 4, wherein when the comparator (131) determines that the difference between the upper limit value (21) and the supply power (141) is equal to zero, the modulator (132) controls the control unit (13) not to generate the charging power (133).

8. A charging method of a series-type charging device (1), comprising the steps of:

   receiving an input power (22) by an input-terminal (11);
   connecting to another series-type charging device (1) through an output-terminal (12) to supply a next-level power (143);
   measuring a supply power (141) of the input power (22) by a detector unit (14);
   obtaining an output power (142) by a shunt of the input power (22), and using a control unit (13) to generate a charging power (133) according to the output power (142) to charge a battery (15);
   **characterized in that** the charging method of a series-type charging device (1) further comprising:

   determining whether to connect the output-terminal (12) to another series-type charging device (1), reducing the output power (142) when another device is connected and converting the input power (22) completely into the next-level power (143) to charge the battery (15) of the other series-type charging device (1) in a first priority;

and

determining whether the supply power (141) of the series-type charging device (1) has reached an upper limit value (21), when the upper limit value (21) has not been reached the remaining input power (22) is distributed to the other series-type charging device (1) immediately to charge the battery (15) of the series-type charging device (1).

9. The charging method of a series-type charging device (1) as recited in claim 8, wherein the control unit (13) further comprises a comparator (131) and a modulator (132), and the modulator (132) controls the control unit (13) based on the comparator (131) to generate the charging power (133).

10. The charging method of a series-type charging device (1) as recited in claim 9, wherein the input power (22) of the input-terminal (11) is supplied by a power supply device (2), and the upper limit value (21) is equal to a rated power of the power supply device (2), and the modulator (132) controls the control unit (13) according to the upper limit value (21) to maintain the input power (22) equal to or smaller than the upper limit value (21).

11. The charging method of a series-type charging device (1) as recited in claim 10, wherein the comparator (131) stores an upper limit value of a charging power (1311) according to a specification of the battery (15), and the modulator (132) controls the control unit (13) according to the upper limit value of the charging power (1311) to maintain the charging power (133) equal to or smaller than the upper limit value of the charging power (1311).

12. The charging method of a series-type charging device (1) as recited in claim 11, further comprising the steps of:

using the comparator (131) to determine a difference between the upper limit value (21) and the supply power (141) and its relation with the upper limit value of the charging power (1311); and
using the modulator (132) to control the control unit (13) to generate the charging power (133), based on the comparator (131).

13. The charging method of a series-type charging device (1) as recited in claim 12, further comprising the step of:
using the modulator (132) to control the control unit (13) to generate the charging power (133) equal to the upper limit value of the charging power (1311) when the comparator (131) determines that the difference between the upper limit value (21) and the supply power (141) is greater than or equal to the upper limit value of the charging power (1311).

14. The charging method of a series-type charging device (1) as recited in claim 12, further comprising the step of:
using the modulator (132) to control the control unit (13) to generate the charging power (133) same as the difference between the upper limit value (21) and the supply power (141) when the comparator (131) determines that the difference between the upper limit value (21) and the supply power (141) is smaller than the upper limit value of the charging power (1311) and greater than zero.

15. The charging method of a series-type charging device (1) as recited in claim 12, further comprising the step of:
using the modulator (132) to control the control unit (13) not to generate the charging power (133) when the comparator (131) determines that the difference between the upper limit value (21) and the supply power (141) is equal to zero.

**Patentansprüche**

1. Serientyp-Ladevorrichtung (1), die aufweist:

eine Eingangsklemme (11), die zum Empfangen einer Eingangsenergie (22) verwendet wird;
eine Ausgangsklemme (12), die mit der Eingangsklemme (11) verbunden ist und mit einer weiteren Serientyp-Ladevorrichtung (1) verbunden ist, um eine Energie eines nächsten Levels (143) zuzuführen;
eine Steuereinheit (13), die zwischen der Eingangsklemme (11) und der Ausgangsklemme (12) verbunden ist und zum Erhalten einer Ausgangsenergie (142) aus einer Ableitung der Eingangsenergie (22) und zum Erzeugen einer Ladeenergie (133) entsprechend der Ausgangsenergie (142) zum Laden einer Batterie (15) vorgesehen ist; und
eine Detektoreinheit (14), deren eines Ende zwischen der Eingangsklemme (11) und der Ausgangsklemme (12) verbunden ist und deren anderes Ende mit der Steuereinheit (13) verbunden ist, um eine Zuführenergie (141) der Eingangsenergie (22) zu messen;
**dadurch gekennzeichnet, dass** die Serientyp-Ladevorrichtung (1) ferner umfasst:
wenn die Ausgangsklemme (12) mit einer weiteren Serientyp-Ladevorrichtung (1) verbunden ist, wird die Ausgangsenergie (142) verringert und wird die Eingangsenergie (22) vollständig in die Energie des nächsten Levels (143) umgewandelt, um die Batterie (15) einer weiteren Serientyp-Ladevorrichtung (1) mit einer ersten Priorität zu laden, und wenn die Zuführenergie (141) der Serientyp-Ladevorrichtung (1) einen oberen Grenzwert (21) nicht erreicht hat, wird die verbleibende Eingangsenergie (22) unverzüglich zu der weiteren Serientyp-Ladevorrichtung (1) verteilt, um die Batterie (15) der Serientyp-Ladevorrichtung (1) zu laden.

**2.** Serientyp-Ladevorrichtung (1) nach Anspruch 1, bei der die Steuereinheit (13) ferner einen Komparator (131) und einen Modulator (132) aufweist und der Modulator (132) die Steuereinheit (13) auf der Basis des Komparators (131) zum Erzeugen der Ladeenergie (133) steuert.

**3.** Serientyp-Ladevorrichtung (1) nach Anspruch 2, bei der die Eingangsenergie (22) der Eingangsklemme (11) von einer Energiezuführvorrichtung (2) zugeführt wird und der obere Grenzwert (21) gleich einer Nennenergie der Energiezuführvorrichtung (2) ist und der Modulator (132) die Ladeenergie (133) der Steuereinheit (13) derart steuert, dass sie unter dem oberen Grenzwert (21) bleibt.

**4.** Serientyp-Ladevorrichtung (1) nach Anspruch 3, bei der der Komparator (131) einen oberen Grenzwert der Ladeenergie (1311) entsprechend einer Spezifikation der Batterie (15) speichert und der Modulator (132) die Ladeenergie (133) der Steuereinheit (13) derart steuert, dass sie unter dem oberen Grenzwert der Ladeenergie (1311) ist.

**5.** Serientyp-Ladevorrichtung (1) nach Anspruch 4, bei der dann, wenn der Komparator (131) bestimmt, dass die Differenz zwischen dem oberen Grenzwert (21) und der Zuführenergie (141) größer als der oder gleich dem oberen Grenzwert (21) der Ladeenergie (133) ist, der Modulator (132) die Steuereinheit (13) zum Erzeugen der Ladeenergie (133) gleich dem oberen Grenzwert der Ladeenergie (1311) steuert.

**6.** Serientyp-Ladevorrichtung (1) nach Anspruch 4, bei der dann, wenn der Komparator (131) bestimmt, dass die Differenz zwischen dem oberen Grenzwert (21) und der Zuführenergie (141) kleiner als ein oberer Grenzwert der Ladeenergie (1311) und größer als null ist, der Modulator (132) die Steuereinheit (13) zum Erzeugen der Ladeenergie (133) gleich der Differenz zwischen dem oberen Grenzwert (21) und der Zuführenergie (141) steuert.

**7.** Serientyp-Ladevorrichtung (1) nach Anspruch 4, bei der dann, wenn der Komparator (131) bestimmt, dass die Differenz zwischen dem oberen Grenzwert (21) und der Zuführenergie (141) gleich null ist, der Modulator (132) die Steuereinheit (13) dahingehend steuert, keine Ladeenergie (133) zu erzeugen.

**8.** Ladeverfahren für eine Serientyp-Ladevorrichtung (1), das die folgenden Schritte umfasst:

Empfangen einer Eingangsenergie (22) durch eine Eingangsklemme (11);
Verbinden mit einer weiteren Serientyp-Ladevorrichtung (1) durch eine Ausgangsklemme (12) zum Zuführen von Energie des nächsten Levels (143);
Messen einer Zuführenergie (141) der Eingangsenergie (22) mittels einer Detektoreinheit (14);
Erhalten einer Ausgangsenergie (142) durch eine Ableitung der Eingangsenergie (22) und Verwenden einer Steuereinheit (13) zum Erzeugen einer Ladeenergie (133) entsprechend der Ausgangsenergie (142) zum Laden einer Batterie (15);
**dadurch gekennzeichnet, dass** das Ladeverfahren für eine Serientyp-Ladevorrichtung (1) ferner umfasst:

Bestimmen, ob die Ausgangsklemme (12) mit einer weiteren Serientyp-Ladevorrichtung (1) zu verbinden ist, Verringern der Ausgangsenergie (142), wenn eine weitere Vorrichtung verbunden ist, und Umwandeln der Eingangsenergie (22) vollständig in die Energie des nächsten Levels (143) zum Laden der Batterie (15) der weiteren Serientyp-Ladevorrichtung (1) mit einer ersten Priorität; und
Bestimmen, ob die Zuführenergie (141) der Serientyp-Ladevorrichtung (1) einen oberen Grenzwert (21) erreicht hat, wenn der obere Grenzwert (21) nicht erreicht worden ist, wird die verbleibende Eingangsenergie (22) unverzüglich zu der weiteren Serientyp-Ladevorrichtung (1) verteilt, um die Batterie (15) der Serientyp-Ladevorrichtung (1) zu laden.

**9.** Ladeverfahren für eine Serientyp-Ladevorrichtung (1) nach Anspruch 8, bei dem die Steuereinheit (13) ferner einen Komparator (131) und einen Modulator (132) aufweist und der Modulator (132) die Steuereinheit (13) auf der Basis des Komparators (131) zum Erzeugen der Ladeenergie (133) steuert.

**10.** Ladeverfahren für eine Serientyp-Ladevorrichtung (1) nach Anspruch 9, bei dem die Eingangsenergie (22) der Eingangsklemme (11) mittels einer Energiezuführvorrichtung (2) zugeführt wird und der obere Grenzwert (21) gleich einer Nennenergie der Energiezuführvorrichtung (2) ist und der Modulator (132) die Steuereinheit (13) entsprechend dem oberen Grenzwert (21) zum Aufrechterhalten der Eingangsenergie (22) gleich dem oder kleiner als der obere Grenzwert (21) steuert.

11. Ladeverfahren für eine Serientyp-Ladevorrichtung (1) nach Anspruch 10, bei dem der Komparator (131) einen oberen Grenzwert der Ladeenergie (1311) entsprechend einer Spezifikation der Batterie (15) speichert und der Modulator (132) die Steuereinheit (13) entsprechend dem oberen Grenzwert der Ladeenergie (1311) zum Aufrechterhalten der Ladeenergie (133) gleich dem oder kleiner als der obere Grenzwert der Ladeenergie (1311) steuert.

12. Ladeverfahren für eine Serientyp-Ladevorrichtung (1) nach Anspruch 11, das ferner die folgenden Schritte umfasst:

Verwenden des Komparators (131) zum Bestimmen einer Differenz zwischen dem oberen Grenzwert (21) und der Zuführenergie (141) und seiner Beziehung zu dem oberen Grenzwert der Ladeenergie (1311); und
Verwenden des Modulators (132) zum Steuern der Steuereinheit (13) zum Erzeugen der Ladeenergie (133) auf der Basis des Komparators (131).

13. Ladeverfahren für eine Serientyp-Ladevorrichtung (1) nach Anspruch 12, das ferner den folgenden Schritt umfasst:
Verwenden des Modulators (132) zum Steuern der Steuereinheit (13) zum Erzeugen der Ladeenergie (133) gleich dem oberen Grenzwert der Ladeenergie (1311), wenn der Komparator (131) bestimmt, dass die Differenz zwischen dem oberen Grenzwert (21) und der Zuführenergie (141) größer als der oder gleich dem oberen Grenzwert der Ladeenergie (1311) ist.

14. Ladeverfahren für eine Serientyp-Ladevorrichtung (1) nach Anspruch 12, das ferner den folgenden Schritt umfasst:
Verwenden des Modulators (132) zum Steuern der Steuereinheit (13) zum Erzeugen der Ladeenergie (133), die die gleiche ist wie die Differenz zwischen dem oberen Grenzwert (21) und der Zuführenergie (141), wenn der Komparator (131) bestimmt, dass die Differenz zwischen dem oberen Grenzwert (21) und der Zuführenergie (141) kleiner als der obere Grenzwert der Ladeenergie (1311) und größer als null ist.

15. Ladeverfahren für eine Serientyp-Ladevorrichtung (1) nach Anspruch 12, das ferner den folgenden Schritt umfasst:
Verwenden des Modulators (132) zum Steuern der Steuereinheit (13) derart, dass sie keine Ladeenergie (133) erzeugt, wenn der Komparator (131) bestimmt, dass die Differenz zwischen dem oberen Grenzwert (21) und der Zuführenergie (141) gleich null ist.

**Revendications**

1. Dispositif de charge de type en série (1), comprenant :

une borne d'entrée (11), utilisée pour recevoir une puissance d'entrée (22) ;
une borne de sortie (12), couplée à la borne d'entrée (11), et couplée à un autre dispositif de charge de type en série (1) pour fournir une puissance de niveau suivant (143) ;
une unité de commande (13), couplée entre la borne d'entrée (11) et la borne de sortie (12), et prévue pour obtenir une puissance de sortie (142) à partir d'une dérivation de la puissance d'entrée (22), et générer une puissance de charge (133) selon la puissance de sortie (142) pour charger une batterie (15) ; et
une unité de détecteur (14), avec une extrémité couplée entre la borne d'entrée (11) et la borne de sortie (12), et l'autre extrémité couplée à l'unité de commande (13) pour mesurer une puissance d'alimentation (141) de la puissance d'entrée (22) ;
**caractérisé en ce que** le dispositif de charge de type en série (1) comprend en outre :
lorsque la borne de sortie (12) est couplée à un autre dispositif de charge de type en série (1), la puissance de sortie (142) est réduite, et la puissance d'entrée (22) est convertie totalement en la puissance de niveau suivant (143) pour charger la batterie (15) d'un autre dispositif de charge de type en série (1) dans une première priorité, et lorsque la puissance d'alimentation (141) du dispositif de charge de type en série (1) n'a pas atteint une valeur limite supérieure (21), la puissance d'entrée (22) restante sera distribuée à l'autre dispositif de charge de type en série (1) immédiatement pour charger la batterie (15) du dispositif de charge de type en série (1).

2. Dispositif de charge de type en série (1) selon la revendication 1, dans lequel l'unité de commande (13) comprend en outre un comparateur (131) et un modulateur (132), et le modulateur (132) commande l'unité de commande (13) sur la base du comparateur (131) pour générer la puissance de charge (133).

3. Dispositif de charge de type en série (1) selon la revendication 2, dans lequel la puissance d'entrée (22) de la borne d'entrée (11) est fournie par un dispositif d'alimentation en puissance (2) et la valeur limite supérieure (21) est égale à une puissance nominale du dispositif d'alimentation en puissance (2), et le modulateur (132) commande la puissance de charge (133) de l'unité de commande (13) pour qu'elle reste sous la valeur limite supérieure (21).

**4.** Dispositif de charge de type en série (1) selon la revendication 3, dans lequel le comparateur (131) stocke une valeur limite supérieure de la puissance de charge (1311) selon une spécification de la batterie (15), et le modulateur (132) commande la puissance de charge (133) de l'unité de commande (13) sous la valeur limite supérieure de la puissance de charge (1311).

**5.** Dispositif de charge de type en série (1) selon la revendication 4, dans lequel lorsque le comparateur (131) détermine que la différence entre la valeur limite supérieure (21) et la puissance d'alimentation (141) est supérieure ou égale à la valeur limite supérieure (21) de puissance de charge (133), alors le modulateur (132) commande l'unité de commande (13), pour générer la puissance de charge (133) égale à la valeur limite supérieure de la puissance de charge (1311).

**6.** Dispositif de charge de type en série (1) selon la revendication 4, dans lequel lorsque le comparateur (131) détermine que la différence entre la valeur limite supérieure (21) et la puissance d'alimentation (141) est inférieure à la valeur limite supérieure de puissance de charge (1311) et supérieure à zéro, le modulateur (132) commande l'unité de commande (13) pour générer la puissance de charge (133) identique à la différence entre la valeur limite supérieure (21) et la puissance d'alimentation (141).

**7.** Dispositif de charge de type en série (1) selon la revendication 4, dans lequel lorsque le comparateur (131) détermine que la différence entre la valeur limite supérieure (21) et la puissance d'alimentation (141) est égale à zéro, le modulateur (132) commande l'unité de commande (13) pour ne pas générer la puissance de charge (133).

**8.** Procédé de charge d'un dispositif de charge de type en série (1), comprenant les étapes consistant à :

recevoir une puissance d'entrée (22) par une borne d'entrée (11) ;
se connecter à un autre dispositif de charge de type en série (1) par le biais d'une borne de sortie (12) pour fournir une puissance de niveau suivant (143) ;
mesurer une puissance d'alimentation (141) de la puissance d'entrée (22) par une unité de détecteur (14) ;
obtenir une puissance de sortie (142) par une dérivation de la puissance d'entrée (22), et utiliser une unité de commande (13) pour générer une puissance de charge (133) selon la puissance de sortie (142) pour charger une batterie (15) ;
**caractérisé en ce que** le procédé de charge d'un dispositif de charge de type en série (1) comprend en outre :

la détermination de la nécessité de connecter ou non la borne de sortie (12) à un autre dispositif de charge de type en série (1), la réduction de la puissance de sortie (142) lorsqu'un autre dispositif est connecté et la conversion de la puissance d'entrée (22) totalement en la puissance de niveau suivant (143) pour charger la batterie (15) du dispositif de charge de type en série (1) dans une première priorité ; et
la détermination du fait que la puissance d'alimentation (141) du dispositif de charge de type en série (1) a atteint ou non une valeur limite supérieure (21), lorsque la valeur limite supérieure (21) n'a pas été atteinte la puissance d'entrée (22) restante est distribuée à l'autre dispositif de charge de type en série (1) immédiatement pour charger la batterie (15) du dispositif de charge de type en série (1).

**9.** Procédé de charge d'un dispositif de charge de type en série (1) selon la revendication 8, dans lequel l'unité de commande (13) comprend en outre un comparateur (131) et un modulateur (132), et le modulateur (132) commande l'unité de commande (13) sur la base du comparateur (131) pour générer la puissance de charge (133).

**10.** Procédé de charge d'un dispositif de charge de type en série (1) selon la revendication 9, dans lequel la puissance d'entrée (22) de la borne d'entrée (11) est fournie par un dispositif d'alimentation en puissance (2), et la valeur limite supérieure (21) est égale à une puissance nominale du dispositif d'alimentation en puissance (2), et le modulateur (132) commande l'unité de commande (13) selon la valeur limite supérieure (21) pour maintenir la puissance d'entrée (22) égale ou inférieure à la valeur limite supérieure (21).

**11.** Procédé de charge d'un dispositif de charge de type en série (1) selon la revendication 10, dans lequel le comparateur (131) stocke une valeur limite supérieure d'une puissance de charge (1311) selon une spécification de la batterie (15), et le modulateur (132) commande l'unité de commande (13) selon la valeur limite supérieure de la puissance de charge (1311) pour maintenir la puissance de charge (133) égale ou inférieure à la valeur limite supérieure de la puissance de charge (1311).

12. Procédé de charge d'un dispositif de charge de type en série (1) selon la revendication 11, comprenant en outre les étapes consistant à :

    utiliser le comparateur (131) pour déterminer une différence entre la valeur limite supérieure (21) et la puissance d'alimentation (141) et sa relation avec la valeur limite supérieure de la puissance de charge (1311) ; et
    utiliser le modulateur (132) pour commander l'unité de commande (13) pour générer la puissance de charge (133), sur la base du comparateur (131).

13. Procédé de charge d'un dispositif de charge de type en série (1) selon la revendication 12, comprenant en outre l'étape consistant à :
utiliser le modulateur (132) pour commander l'unité de commande (13) pour générer la puissance de charge (133) égale à la valeur limite supérieure de la puissance de charge (1311) lorsque le comparateur (131) détermine que la différence entre la valeur limite supérieure (21) et la puissance d'alimentation (141) est supérieure ou égale à la valeur limite supérieure de la puissance de charge (1311).

14. Procédé de charge d'un dispositif de charge de type en série (1) selon la revendication 12, comprenant en outre l'étape consistant à :
utiliser le modulateur (132) pour commander l'unité de commande (13) pour générer la puissance de charge (133) identique à la différence entre la valeur limite supérieure (21) et la puissance d'alimentation (141) lorsque le comparateur (131) détermine que la différence entre la valeur limite supérieure (21) et la puissance d'alimentation (141) est inférieure à la valeur limite supérieure de la puissance de charge (1311) et supérieure à zéro.

15. Procédé de charge d'un dispositif de charge de type en série (1) selon la revendication 12, comprenant en outre l'étape consistant à :
utiliser le modulateur (132) pour commander l'unité de commande (13) pour ne pas générer la puissance de charge (133) lorsque le comparateur (131) détermine que la différence entre la valeur limite supérieure (21) et la puissance d'alimentation (141) est égale à zéro.

FIG. 1 (Prior Art)

FIG. 2

EP 2 610 994 B1

Using a power supply device to supply an input power, and transmit the input power to an input-terminal

S11

Determining whether the output-terminal is connected to another series type charging device — S12

NO — Setting the input power to be equal to the output power and the control unit receives the output power, if the output-terminal is not connected to another series type charging device

S15   S14

YES   S13

Reducing the output power, and convert the input power into a next-level power, and a control unit of another series type charging device receives the next-level power which is shunt to obtain an output power, if the output-terminal is connected to another series type charging device

Using a comparator to determine the difference between an upper limit value and a supply power, and use the upper limit value of the charging power for a comparison

S163

S161

Using a modulator to control the control unit to generate a charging power equal to the upper limit value of the charging power and perform a full charge, if the difference between the upper limit value and the supply power is greater than or equal to the upper limit value of the charging power

S162

Using the modulator to control the control unit to generate charging power same as the difference between the upper limit value and the supply power and perform a partial charge, if the difference between the upper limit value and the supply power is smaller than the upper limit value of the charging power and greater than zero

Using the modulator to control the control unit not to generate any charging power, if the difference between the upper limit value and the supply power is equal to zero

FIG. 3

EP 2 610 994 B1

FIG. 4

EP 2 610 994 B1

FIG. 5

EP 2 610 994 B1

EP 2 610 994 B1

Ampere

5

4

3

2

1

0

Time

00:00:00 00:15:00 00:30:00 00:45:00 01:00:00 01:15:00 01:30:00 01:45:00 02:00:00 02:15:00 02:30:00 02:45:00 03:00:00 03:15:00 03:30:00 03:45:00 04:00:00 04:15:00 04:30:00 04:45:00 05:00:00 05:15:00 05:30:00 05:45:00 06:00:00 06:15:00 06:30:00 06:45:00 07:00:00 07:15:00

#1 series-type charging device

#2 series-type charging device

#3 series-type charging device

#4 series-type charging device

#5 series-type charging device

#6 series-type charging device

FIG. 6

**EP 2 610 994 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5557189 A
- US 2008278119 A1
- US 2008315826 A